(19) **Europäisches Patentamt**
**European Patent Office**
**Office européen des brevets**

(11) **EP 1 941 997 B1**

(12) **EUROPEAN PATENT SPECIFICATION**

(45) Date of publication and mention
of the grant of the patent:
**27.05.2009 Bulletin 2009/22**

(51) Int Cl.:
*B32B 27/32* (2006.01)    *C08F 210/06* (2006.01)
*C08F 297/08* (2006.01)    *C08J 5/18* (2006.01)

(21) Application number: **06026211.0**

(22) Date of filing: **18.12.2006**

(54) **Terpolymer with high melting point**

Terpolymer mit hohem Schmelzpunkt

Terpolymère à point de fusion élevé

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**09.07.2008 Bulletin 2008/28**

(73) Proprietor: **Borealis Technology Oy**
**06101 Porvoo (FI)**

(72) Inventors:
• **Ackermans, Nina**
**3980 Tessenderlo (BE)**
• **Boelaers, Guido**
**3900 Overpelt (BE)**

• **De Ryck, Mark**
**3270 Scherpenheuvel (BE)**

(74) Representative: **Lux, Berthold et al**
**Maiwald Patentanwalts GmbH**
**Postfach 330523**
**80065 München (DE)**

(56) References cited:
EP-A- 1 302 310    EP-A- 1 408 077
EP-A- 1 484 345    EP-A- 1 495 861
EP-A- 1 634 699    EP-A- 1 724 289
DE-A1- 19 827 327    DE-A1- 19 949 235
US-A- 4 404 342    US-A- 4 634 745

**Description**

The present invention relates to a new propylene terpolymer suitable as a metallised biaxially oriented polypropylene (BOPP) film and its manufacture as well as its use.

In the field of food packing there is a continuous need for metallised biaxially oriented polypropylene (BOPP) films with excellent barrier properties to improve the shelf life of the sealed products, like coffee, potato chips, cookies and the like.

Commercially available polypropylenes used for metallised biaxially oriented polypropylene (BOPP) films have several drawbacks, i.e. cannot combine good processing properties with good end properties, like barrier properties. However to make a product commercially attractive it must be easily producible, i.e. inter alia no surface cracking of the film shall occur during converting and/or winding processes. Moreover it must be ensured that a smooth film surface is obtained as well as that an extrusion lamination of the terpolymer to other substrates without forming crazes during the process is possible. Additionally, of course, the barrier properties of such films must be satisfactorily. Commonly known terpolymers do not combine good processing properties with good end properties but suffer mostly from brittle surfaces leading to crazes or have inferior barrier properties.

WO 98/58971 discloses a terpolymer of propylene, ethylene and a $C_4$ to $C_8$ $\alpha$-olefin having a melting temperature below 132 °C. The terpolymer according to this patent application suffers in particular from low barrier properties caused by a rather high ethylene content.

US 5 948 547 is directed to a composition comprising at least two propylene terpolymers with different ethylene and butene content. The composition is in particular specified by rather high amounts of comonomers, i.e. more than 10 wt%, in the total composition. However high amounts of comonomers lead to inferior barrier properties as well as to high amounts of xylene solubles.

US 5 326 625 discloses a sealable, opaque, biaxially oriented multilayer polypropylene film, wherein the top layer can be a terpolymer. However also this terpolymer is characterized by high amounts of ethylene and shows therefore similar drawbacks as the terpolymers described above.

EP 0 674 991 A1 is concerned with a composition comprising at least two polymer types, wherein one of the two is a terpolymer. The composition is characterized in particular by a rather low melting point, i.e. not higher than 143 °C and high amounts of comonomers, i.e. more than 7 wt%.

Thus, considering the problems outlined above, it is an object of the present invention to provide a poylpropylene being suitable as a skin layer of a biaxially oriented polypropylene (BOPP) multilayer film, in particular suitable as a skin layer of a metallised biaxially oriented polypropylene (BOPP) multilayer film. It is in particular of interest to provide a polypropylene which supports an easy processing to said multilayer film avoiding any crazes during the manufacture. Moreover said film on the basis of the new polypropylene shall preferably prolong the shelf life of the food wrapped therein, i.e. the polypropylene shall have good barrier properties. Additionally it would be appreciated that the polypropylene ensures a good extrusion lamination process of the substrate.

The finding of the present invention is to provide a terpolymer of rather high crystallinity with a rather broad compositional spread.

Accordingly the present invention provides a terpolymer of propylene, ethylene and a $C_4$ to $C_8$ $\alpha$-olefin, wherein

a. the amount of propylene in said terpolymer is at least 94 wt.-% and
b. the amount of ethylene in said terpolymer is not more than 1.5 wt%,
c. the melting temperature of said terpolymer is more than 140 °C, and
d. the terpolymer has been produced in the presence of a Ziegler-Natta catalyst.

Preferably propylene, ethylene and a $C_4$ to $C_8$ $\alpha$-olefin are the only monomers of the inventive terpolymer. The $C_4$ to $C_8$ $\alpha$-olefin can be any $\alpha$-olefin, i.e. branched or linear $\alpha$-olefin, like 1-butene, 1-pentene, 4-methyl-1-pentene, 1-hexene, 1-heptene or 1-octene, however 1-butene is preferred.

Surprisingly, it has been found that a terpolymer with such features has superior properties compared to known terpolymers in this technical field. The terpolymer is in particular characterized to be less sensitive to surface defects during the processing of biaxially oriented polypropylene films and less sensitive to surface crazing during the manipulation of said films, like in metallising said films. Achieved are these beneficial properties by a rather high melting temperature and rather low content of the remaining comonomers, i.e. of ethylene and $C_4$ to $C_8$ $\alpha$-olefin, preferably 1-butene, present in the terpolymer. Moreover the terpolymer has improved barrier properties which further widen the applications of the inventive terpolymer.

The first requirement of the inventive terpolymer is a rather high content of propylene in the terpolymer, i.e. higher than 94 wt.-%. A rather high amount of propylene in the terpolymer indicates on the other hand rather low amounts of the other remaining comonomers, namely of ethylene and $C_4$ to $C_8$ $\alpha$-olefin. Such a ratio of propylene to the other comonomers improves the crystallinity properties and improves additionally the barrier properties. Thus it is preferred that the propylene content in the terpolymer is at least 95 wt.-%, more preferred at least 96 wt.-% and yet more preferred at least 96.5 wt.-%.

As stated above not only the propylene content in the polymer must be rather high but also the content of ethylene shall be rather low. A rather low amount of ethylene is beneficial for gas barrier properties of film produced from the polymer. Accordingly the ethylene content in the terpolymer is not more than 1.5 wt.-%, preferably not more than 1.0 wt.-%. On the other hand ethylene must be present in the terpolymer to reduce the surface brittleness to avoid surface cracking during film manipulation. Thus ethylene must be at least detectable as defined below. However it is preferred that the ethylene content is at least 0.2 wt.-%, more preferred at least 0.3 wt.-%, still more preferred at least 0.4 wt.-%, and yet more preferred at least 0.5 wt.-%. A preferred range of ethylene in the terpolymer is 0.1 to 1.5 wt.-%, more preferred 0.3 to 1.2 wt.-%, yet more preferred 0.5 to 1.0 wt.-%.

For the $C_4$ to $C_8$ $\alpha$-olefin, in particular 1-butene, applies similar considerations as for ethylene. Accordingly the content of $C_4$ to $C_8$ $\alpha$-olefin, preferably 1-butene, in the terpolymer shall be rather low. A rather low amount of $C_4$ to $C_8$ $\alpha$-olefin, preferably 1-butene, ensures a high melting temperature. Accordingly it is preferred that the content of $C_4$ to $C_8$ $\alpha$-olefin, preferably 1-butene, in the terpolymer is below 4.0 wt.-%, more preferably below 3.5 wt.-%, yet more preferably not more than 3.0 wt.%. On the other hand $C_4$ to $C_8$ $\alpha$-olefin, preferably 1-butene, must be present in the terpolymer to guarantee good processing properties and good metal adhesion. Thus $C_4$ to $C_8$ $\alpha$-olefin, preferably 1-butene, must be at least detectable as defined below. However it is preferred that the content of $C_4$ to $C_8$ $\alpha$-olefin, preferably 1-butene, is at least 1.0 wt.-%, more preferred at least 1.3 wt.-%, still more preferred at least 1.6 wt.-%, and yet more preferred at least 2.0 wt.-%. A preferred range of $C_4$ to $C_8$ $\alpha$-olefin, preferably 1-butene, in the terpolymer is 1.0 to 3.5 wt.-%, more preferred 1.5 to 3.2 wt.-%, yet more preferred 2.0 to 3.0 wt.-%.

The comonomer content, i.e. the content of propylene, ethylene and of $C_4$ to $C_8$ $\alpha$-olefin, preferably 1-butene, can be determined with FT infrared spectroscopy, as described below in the examples.

A further requirement of the invention is that the melting temperature of the terpolymer is rather high, i.e. higher than 140 °C. A high melting temperature of the terpolymer ensures a good extrusion lamination of the multilayer film. Thus it is preferred that the melting temperature is at least 143 °C, more preferably at least 145 °C. On the other hand the melting temperature should be not too high. Thus it is preferred that the melting temperature is not higher than 158 °C, still more preferred not higher than 155 °C and yet more preferred not higher than 153 °C. Preferably the melting temperature is in the range of 141 to 157 °C, more preferably in the range of 142 to 155 °C, still more preferably in the range of 145 to 152 °C, and yet more preferably in the range of 145 to 151 °C.

The stepwise isothermal segregation technique (SIST) provides a possibility to determine the lamellar thickness distribution and therewith the isotactic sequence length distribution of the inventive terpolymer. A significant amount of rather long isotactic sequence length "s" in the terpolymer improves the barrier properties of the same. Thus it is preferred that the inventive terpolymer comprises at least 5 wt-%, still more preferred at least 7 wt-%, yet more preferred at least 8 wt-%, still more preferred at least 10 wt-%, of a crystalline fraction with an isotactic sequence length "s" of more than 34 to less than 49, wherein said fraction is determined by stepwise isothermal segregation technique (SIST) as defined in the example section. In turn an upper limit of this fraction is appreciated. Accordingly it is preferred that the crystalline fraction with an isotactic sequence length "s" of more than 34 to less than 49 is below 30 wt.-%, more preferred below 25 wt.-%. A preferred range for the crystalline fraction with an isotactic sequence length "s" of more than 34 to less than 49 is 5 to 30 wt.-%, more preferred of 10 to 25 wt.-%.

On the other hand it is preferred that the inventive terpolymer is in particular characterized by a broad compositional spread, i.e. the terpolymer has a wide spread in isotactic sequence length "s". Such a wide spread guarantees that on the one hand the gas permeability of a film based on said terpolymer is rather low and that on the other hand the terpolymer can easily be processed into a metallised biaxially oriented polypropylene film. Thus it is preferred that the terpolymer comprises additionally at least 5 wt.-%, more preferred at least 8 wt.-%, yet more preferred at least 10 wt.-%, still more preferred at least 12 wt.-%, of a crystalline fraction with an isotactic sequence length "s" of below 18. On the other hand the fraction should be not too big otherwise the barrier properties are negatively influenced. Thus it is preferred that the crystalline fraction with an isotactic sequence length "s" of below 18 is not more than 22 wt.-%, still more preferred not more than 20 wt.-%, yet more preferred not more than 18 wt.-%. A preferred range for the crystalline fraction with an isotactic sequence length "s" of below 18 is 5 to 20 wt.-%, more preferred of 10 to 18 wt.-%.

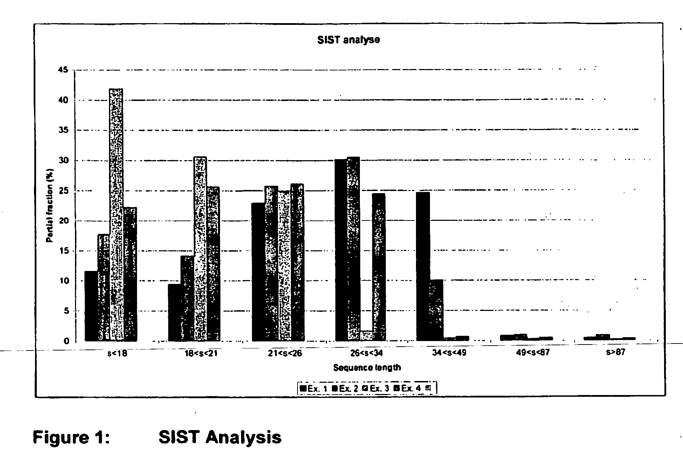

Of course it is preferred that the inventive terpolymer has not only crystalline fractions with a rather long isotactic sequence length "s", i.e. of more than 34 to less than 49, and a rather short isotactic sequence length "s", i.e. of below 18, but comprises also fractions with an isotactic sequence length falling in-between the two extremes (see Figure 1).

Thus the following amounts for the fractions with an isotactic sequence length "s" of 18 to 21, 21 to 26, and 26 to 34 are preferred.

A preferred range for the crystalline fraction with an isotactic sequence length "s" of 18 to 21 is 5 to 20 wt.-%, more preferred of 8 to 15 wit.-%.

A preferred range for the crystalline fraction with an isotactic sequence length "s" of 21 to 26 is 15 to 30 wt.-%, more preferred of 20 to 26 wt.-%.

A preferred range for the crystalline fraction with an isotactic sequence length "s" of 26 to 34 is 20 to 35 wt.-%, more preferred of 25 to 32 wt.-%.

The Vicat softening temperature, like Vicat A50 at 10 N, reflects the heat softening characteristic of polymers. For the measurement a flat specimen is placed in a temperature regulated heating bath, a flat-ended needle is set on the specimen surface under a specific load and the bath temperature is raised at a constant rate. The temperature of the bath at which the penetration of the needle has reached a predefined level is the Vicat A50 softening temperature at 10 N according to ISO 306. The exact measuring method is determined in the example section.

Accordingly, the Vicat A50 temperature at 10 N is an appropriate parameter to define the inventive terpolymer with regard to its thermal behaviour. A higher Vicat A50 temperature at 10 N means a better thermal resistance of a surface. Thus it is appreciated that the inventive terpolymer leads to a high Vicat A50 temperature when formed into a film.

Accordingly, the inventive terpolymer has preferably a heat resistance measured according to ISO 306 Vicat A50 at 10 N of at least 127 °C, more preferably of more than 129 °C and yet more preferably of more than 131 °C.

The heat sealing initiation temperature (SIT) of the terpolymer of the instant invention is preferably in the range of 120 to 140 °C, more preferably in the range of 125 to 135 °C. For determining the heat sealing initiation temperature it is referred to the example section.

Furthermore, it is preferred that the terpolymer has a melt flow rate (MFR) given in a specific range. The melt flow rate mainly depends on the average molecular weight. This is due to the fact that long molecules render the material a lower flow tendency than short molecules. An increase in molecular weight means a decrease in the MFR-value. The melt flow rate (MFR) is measured in g/10 min of the polymer discharged through a defined dye under specified temperature and pressure conditions and the measure of viscosity of the polymer which, in turn, for each type of polymer is mainly influenced by its molecular weight but also by its degree of branching. The melt flow rate measured under a load of 2.16 kg at 230 °C (ISO 1133) is denoted as $MFR_2$. Accordingly, it is preferred that in the present invention the terpolymer has an $MFR_2$ in a range of 0.10 to 50.00 g/10 min, more preferably of 0.50 to 30.00 g/10 min, still more preferred of 1.00 to 20 g/10 min. In a preferred embodiment, the $MFR_2$ is in a range of 3.00 to 10.00 g/10 min. In an other preferred embodiment the $MFR_2$ is about 6.00 g/10 min.

It is in addition preferred that the inventive terpolymer is further characterized by low amounts of extractables. Extractables are undesirable in the field of food packaging or in the field of medical packaging. However the inventive terpolymer shall be preferably used for such applications. Thus it is preferred that the terpolymer of this invention has good processing properties even though said terpolymer is characterized by rather low amounts of xylene solubles and/or hexane solubles.

Xylene solubles are the part of the polymer soluble in cold xylene determined by dissolution in boiling xylene and letting the insoluble part crystallize from the cooling solution (for the method see below in the experimental part). The xylene solubles fraction contains polymer chains of low stereo-regularity an is an indication for the amount of non-crystalline areas.

Thus it is preferred that the inventive terpolymer has xylene solubles less than 10.00 wt.-%, more preferably less than 6.00 wt.-%.

Similar to xylene solubles the hexane solublues indicate that part of a polymer which has a low isotacticity and crytallinity and which is soluble in hexane at the boiling point.

Accordingly it is preferred that the inventive terpolymer has hexane solubles less than 4.00 wt.-%, more preferably less than 2.50 wt.-%.

The flexural modulus is the ratio, within the elastic limit, of the applied stress on a test specimen in flexure, to the corresponding strain in the outermost fibers of the specimen. The fexurual modulus of the instant invention has been determined according to ISO 178.

Preferably, the terpolymer has a fexurual modulus of at least 950 MPa, more preferably of at least 980 MPa, yet more preferably of at least 1040 MPa.

In addition it is preferred that the terpolymer as defined above (and further defined below) is preferably multimodal, more preferably bimodal.

"Multimodal" or "multimodal distribution" describes a distribution that has several relative maxima (contrary to unimodal having only one maximum). In particular, the expression "modality of a polymer" refers to the form of its molecular weight distribution (MWD) curve, i.e. the appearance of the graph of the polymer weight fraction as a function of its molecular weight. If the polymer is produced in the sequential step process, i.e. by utilizing reactors coupled in series, and using different conditions in each reactor, the different polymer fractions produced in the different reactors each have their own molecular weight distribution which may considerably differ from one another. The molecular weight distribution curve of the resulting final polymer can be seen at a superimposing of the molecular weight distribution curves of the polymer fractions which will, accordingly, show a more distinct maxima, or at least be distinctively broadened compared with the curves for individual fractions.

A polymer showing such molecular weight distribution curve is called bimodal or multimodal, respectively. The multimodal, preferably bimodal, terpolymer is in particular achieved by the process defined below.

In the following the preferred process is described to obtain the inventive terpolymer. Preferably the terpolymer is produced in a combination of one or more bulk polymerisation reactor(s) and one or more gas phase reactor(s).

However any other process is suitable as long as the inventive terpolymer is obtained.

According to the process as described herein, a process has been designed for producing a terpolymer as defined in the instant invention in at least one slurry reactor in the presence of Ziegler-Natta catalyst(s) at elevated temperature. The process is in particular characterized by a feed gradient of ethylene and/or $C_4$ to $C_8$ $\alpha$-olefin (preferably 1-butene), i.e. the amount of ethylene and/or $C_4$ to $C_8$ $\alpha$-olefin fed into the process decreases over the time. The process comprises preferably the following steps:

a) feeding into a slurry reactor system, more preferably into a two slurry reactors system, a reaction mixture containing at least 79.5 wt.-% of propylene, 0.5 to 2.0 wt.-%, more preferably about 1.5 wt.-%, of ethylene, 20.0 to 5.0 wt.-%, more preferably about 16.5 wt.-%, of $C_4$ to $C_8$ $\alpha$-olefin (preferably 1-butene), a Ziegler-Natta catalyst system capable of achieving olefin polymerization, and optionally hydrogen,

b) polymerizing said reaction mixture at a temperature of less than 70 °C but more than 60 °C for a average residence time of the comonomers in the slurry reactor system of 1 to 3 hours, preferably 2 hours to obtain a propylene terpolymer amounting to 80 to 100 wt.-%, more preferably 90 to 99 wt.-%, of the end terpolymer product, wherein the ethylene and/or $C_4$ to $C_8$ $\alpha$-olefin (preferably 1-butene) concentrations in the feed to the slurry reactor system decrease over a time period of 6 to 9 hours, and at the end of the polymerisation step the ethylene concentration in the feed to the slurry reactor system is in the range of 0.2 to 0.4 wt.-%, more preferably about 0.3 wt.-%, and the $C_4$ to $C_8$ $\alpha$-olefin (preferably 1-butene) concentration in the feed to the slurry reactor system is in the range of 1.0 to 2.5 wt.-%, more preferably about 2.0 wt.-%, to obtain the end terpolymer product (in case all of the terpolymer is produced in step b), wherein the ethylene content is not more than 1.5 wt.-%, preferably is in the range of 0.1 to 1.3 wt.-%, more preferably is in the range of 0.5 to 1.0 wt.-%, still more preferably is about 0.4 wt.-% and the $C_4$ to $C_8$ $\alpha$-olefin (preferably 1-butene) content is not more than 4.0 wt.-%, preferably is in the range of 1.0 to 3.5 wt.-%, more preferably is in the range of 2.0 to 3.0 wt.-%,

c) transferring said reaction mixture into a gas phase reactor operating at a pressure higher than 5 bar, preferably higher than 10 bar, without adding ethylene, $C_4$ to $C_8$ $\alpha$-olefin (preferably 1-butene) and hydrogen, and

d) continuing polymerization in said gas phase reactor, wherein the amount of the ethylene and/or $C_4$ to $C_8$ $\alpha$-olefin (preferably 1-butene) decreases during the polymerization over the time, for obtaining a propylene terpolymer amounting to 0 to 20 wt.-%, more preferably 1 to 10 wt.-%, of the end terpolymer product, wherein the final terpolymer is characterized as defined in the instant invention.

Thus, according to the present invention, the terpolymerization is carried out in a slurry phase, preferably in a loop reactor system, more preferably in a two loop reactors system, by using relatively low amounts of ethylene and of $C_4$ to $C_8$ $\alpha$-olefin (preferably 1-butene) as comonomers. Moreover the process is characterized by a feed gradient over the polymerization time of at least one of the two comonomers, i.e. ethylene and/or of $C_4$ to $C_8$ $\alpha$-olefin (preferably 1-butene). More preferably during the production of the inventive terpolymer the ethylene and the $C_4$ to $C_8$ $\alpha$-olefin (preferably 1-butene) content is gradually decreased resulting in a broad comonomer distribution providing benefits in BOPP processing. As stated above it is preferred that at the starting point (step a)) the ethylene feed is about 1.5 wt.-% and the $C_4$ to $C_8$ $\alpha$-olefin (preferably 1-butene) feed is about 16.5 wt.-%. During the processing in step b) the ethylene and the $C_4$ to $C_8$ $\alpha$-olefin (preferably 1-butene) content in the powder is decreased by lowering the ethylene and the $C_4$ to $C_8$ $\alpha$-olefin (preferably 1-butene) concentration in the feed to the slurry reactor, preferably to the loop reactor, more preferably to the two loop reactors. This is done gradually over the time, the speed of reduction depends on the lot size. Ethylene is preferably decreased as stated above from about 1.5 wt.-% to about 0.3 wt.-% in the first half of the lot and kept preferably constant for the second part of the lot. The $C_4$ to $C_8$ $\alpha$-olefin (preferably 1-butene) is preferably lowered to 2.0 wt.-%. The melt flow of the powder is preferably kept constant by adjusting the hydrogen to the slurry reactor, more preferably to the loop reactor, still more preferably to the two loop reactors, according the comonomer concentration in the feed to the said reactor(s). The reaction temperature is preferably about 63 °C.

The $C_4$ to $C_8$ $\alpha$-olefin can be preferably 1-butene, 1-pentene, 4-methyl-1-pentene, 1-hexene, 1-heptene or 1-octene. However 1-butene is the most preferred $C_4$ to $C_8$ $\alpha$-olefin.

As catalyst any ordinary stereospecific Ziegler-Natta catalysts can be used. An essential component in those catalysts are solid catalyst components comprising a titanium component having at least one titanium-halogen bond, an electron donor compound and a magnesium halide in active form. The catalysts can contain as an internal electron donor compound compounds selected from ethers, ketones, lactones, compounds containing N, P and/or S atoms and esters of mono and dicarboxylic acids.

Polymerization in step b) can be carried out in the presence of an organoaluminium compound, such as an aluminium alkyl and an optional external donor compound at temperatures lower than 70 °C but more than 60 C, preferably at a temperature about 63 °C, and pressures in the range of 30 to 90 bar, preferably 30 to 70 bar. The polymerization is carried out in such conditions that 80 to 100 wt.-%, preferably 90 to 99 wt.-% of the end product is polymerized in the slurry reactor or reactors. The residence time in the slurry reactor system can be between 60 and 180 min.

After the polymerization is complete in the slurry reactor, the reaction medium is not separated from the polymer particles in a conventional flash tank. Instead, the whole content of the polymerization medium along with the polymer particles are transferred into a gas phase reactor, if necessary.

In the gas phase reactor, 1 to 20 wt.-%, preferably 1 to 10 wt.-% of the final end terpolymer product is formed. The polymerization can be carried out at a temperature of 60 to 90 °C and at a pressure higher than 5 bar, preferably higher than 10 bar. No comonomers and hydrogen are added into the gas phase reactor.

The liquid medium from the first stage reactor can function as a cooling medium of the fluid bed in the gas phase reactor, when evaporating therein.

The amount of $C_4$ to $C_8$ α-olefin (preferably 1-butene) after the gas phase polymerisation (step d)) is preferably in the range of 0.1 to 4.0 wt.-%, more preferably in the range of 2.0 to 3.5 wt.-%. The amount of propylene in the final terpolymer (after step d)) is at least 94 wt.-%, more preferably at least 95 wt.-%. Finally the amount of ethylene in the terpolymer after the gas phase polymerization (step d)) can be 0.1 to 1.5 wt.-%, more preferably 0.5 to 1.0 wt.-%. Thus the content of $C_4$ to $C_8$ α-olefin such as 1-butene is very low. The same applies for the ethylene content in the inventive terpolymer.

The present invention is not only related to the inventive terpolymer itself but also to its use and to films and/or articles comprising the inventive terpolymer. Accordingly the inventive terpolymer as defined above is used for films, preferably for biaxially oriented multilayer films, more preferably for metallised biaxially oriented multilayer films. Even more preferred the terpolymer is used in the packaging industry, i.e. for packaging materials, i.e. food packaging materials. Moreover the presented invention is directed to films, preferably to biaxially oriented multilayer films, more preferably to metallised biaxially oriented multilayer films comprising the inventive terpolymer as defined above. More precisely and preferably the metallised biaxially oriented multilayer film comprises

> (a) a core layer comprising preferably a high crystallinity polypropylene homopolymer, more preferably a high crystallinity polypropylene homopolymer with a stereoregularity greater than 93%;
> (b) a first skin layer adjacent to said core layer wherein said skin layer comprises the inventive terpolymer, more preferably is the inventive terpolymer;
> (c) optionally a tie layer adjacent to said first skin layer comprising preferably maleic anhydride modified polypropylene homopolymer or copolymer;
> (d) a metallized layer, preferably a aluminium layer, adjacent to said first skin or optionally first tie layer and on a side of the skin or optionally first tie layer opposite the core layer; and
> (e) optionally a second skin layer adjacent to said core layer and on a side of said core layer opposite said first skin layer, said second skin layer comprising preferably a polyolefin selected from the group consisting of ethylene-propylene random copolymer, ethylene-propylene-butylene terpolymer, propylene-butylene copolymer, and ethylene-propylene impact copolymer.

Moreover the present invention is directed to articles comprising the inventive terpolymer as defined above. In a preferred aspect the articles comprising the inventive terpolymer, preferably as part of a biaxially oriented multilayer film, more preferably as a part of metallised biaxially oriented multilayer film as defined above, are selected from the group of packaging material, food packaging material (in particular for coffee, potato chips and/or cookies), foils and wrapping material.

The inventive biaxially oriented multilayer films, preferably the inventive metallised biaxially oriented multilayer films, comprising the terpolymer are produced by known manner in the art. One method of making the above-described (metallised) biaxially oriented multilayer film comprises coextruding a multilayer melt of thermoplastic polymers through a die, then cooling, e. g., by quenching, the multilayer melt to form a multilayer sheet. The multilayer sheet is then stretched in the machine direction (MD) over a series of heated rollers travelling at a differential speed to form an MD oriented multilayer film. The stretching of the MD oriented multilayer film takes place in a heated tenter frame to form a biaxially oriented multilayer film. Surface treating is then performed on the first skin layer and/or the second skin layer of the biaxially oriented multilayer film with a treatment selected from the group consisting of corona treatment, flame treatment and plasma treatment. Then the first skin layer is preferably metallized in a vacuum metallizer to form the desired metallized biaxially oriented multilayer film.

The present invention will now be described in further detail by the examples provided below.

**Examples**

**1. Definitions/Measuring Methods**

The following definitions of terms and determination methods apply for the above general description of the invention as well as to the below examples unless otherwise defined.

**A. NMR-spectroscopy measurements:**

The $^{13}$C-NMR spectra of polypropylenes were recorded on Bruker 400MHz spectrometer at 130 °C from samples dissolved in 1,2,4-trichlorobenzene/benzene-d6 (90/10 w/w). For the pentad analysis the assignment is done according to the methods described in literature: (T. Hayashi, Y. Inoue, R. Chüjö, and T. Asakura, Polymer 29 138-43 (1988).and Chujo R, et al,Polymer 35 339 (1994).

**B. Differential Scanning Calorimetry (DSC)**

Melting temperature Tm, crystallization temperature Tc, and the degree of crystallinity are measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.

Also the melt- and crystallization enthalpy (Hm and Hc) were measured by the DSC method according to ISO 11357-3. In case more than one melting peak is observed, the melting temperature Tm (as used to interpret the SIST data) is the maximum of the peak at the highest melting temperature with an area under the curve (melting enthalpy) of at least 5% of the total melting enthalpy of the crystalline fraction of the polypropylene.

**C. Melt Flow Rate**

$MFR_2$ is measured according to ISO 1133 (230°C, 2.16 kg load).

**D. Comonomer content**

The comonomer content is measured with Fourier transform infrared spectroscopy (FTIR) calibrated with $^{13}$C-NMR. When measuring the ethylene content in polypropylene, a thin film of the sample (thickness about 250 $\mu$m) was prepared by hot-pressing. The area of $-CH_2-$ absorption peak (710-750 cm$^{-1}$) and of the buteen absorption peak (750 -780cm$^{-1}$) was measured with Perkin Elmer FTIR 1600 spectrometer. The method was calibrated by ethylene content and 1-butene content data measured by $^{13}$C-NMR.

**E. Stiffness of the Film**

Stiffness Film TD (transversal direction), Stiffness Film MD (machine direction), Elongation at break TD and Elongation at break MD are determined according to ISO 527-3 (cross head speed: 1 mm/min).

**F. Flexural Modulus**

Flexural Modulus is measured according to ISO 178.

**G. Haze and transparency**

Haze and transparency are determined: ASTM D1003-92.

**H. Stepwise Isothermal Segregation Technique (SIST)**

The isothermal crystallisation for SIST analysis was performed in a Mettler TA820 DSC on 5$\pm$0.5 mg samples at decreasing temperatures between 200°C and 105°C.

(i) The terpolymer samples were melted at 225 °C for 5 min.,

(ii) then cooled with 60 °C/min to 145 °C

(iii) held for 2 hours at 145 °C,

(iv) then cooled with 60 °C/min to 135 °C

(v) held for 2 hours at 135 °C,

(vi) then cooled with 60 °C/min to 125 °C

(vii) held for 2 hours at 125 °C,

(viii) then cooled with 60 °C/min to 115 °C

(ix) held for 2 hours at 115 °C,

(x) then cooled with 60 °C/min to 105 °C

(xi) held for 2 hours at 105 °C.

(xii) then cooled down with 60 °C/min to 20 °C and

(xiii) then heated at a heating rate of 10 °C/min up to 200 °C obtaining a melting curve of said cooled terpolymer samples, wherein

said melting curve is used

(a) to calculate in a first step the lamella thickness distribution according to Thomson-Gibbs equation (Eq 1.)

$$T_m = T_0\left(1 - \frac{2\sigma}{\Delta H_0 \cdot L}\right) \qquad (1)$$

wherein

$T_0 = 457$ K,
$\Delta H_0 = 184 \times 10^6$ J/m$^3$,
$\sigma = 0{,}0496$ J/m$^2$,
$T_m$ is the measured temperature (K) and
L is the lamella thickness (nm) and

(b) to calculate in a second step the isotactic sequence length "s" using the equation (Eq 2.)

$$s = L / (0.65 \cdot 3) \qquad (2)$$

wherein

s is the isotactic sequence length and
L is the lamella thickness.

The average isotactic sequence length is calculated from lamella thickness using a fibre length of 6.5 Å for the 3/1 helices of polypropylene (Monoclinic $\alpha$-form, c-axis).

All measurements were performed in a nitrogen atmosphere. The melt enthalpy is recorded as a function of temperature and evaluated through measuring the melt enthalpy of fractions melting within temperature intervals of 10 °C.

### I. Heat sealing initiation temperature (SIT):

1. General

The method determines the sealing temperature range of polypropylene films, in particular blown films. The sealing temperature range is the temperature range, in which the films can be sealed according to conditions given below.
The lower limit (heat sealing initiation temperature (SIT)) is the sealing temperature at which a sealing strength of > 3 N is achieved. The upper limit (sealing end temperature (SET)) is reached, when the films stick to the sealing device.

2. Testing

Determined on J&B Universal Sealing Machine Type 3000

| | |
|---|---|
| Measured on a film - specimen width: | 25,4 mm |
| Seal Pressure: | 0,1 N/mm |
| Seal Time: | 0,1 sec |
| Cool time: | 99 sec |
| Peel Speed: | 10 mm/sec |
| Start temperature: | 80 °C |
| End temperature: | 150 °C |
| Increments: | 10 °C -- specimen is sealed A to A |

at each sealbar temperature and seal strength (force) is determined at each step.
The temperature is determined at which the seal strength reaches 3 N.

### J. Xylene solubles (XS, wt.-%)

2 g of polymer is added to 200 ml xylene in a reflux vessel with $N_2$ purge.
The mixture is heated up to 135 °C in 35 minutes and stirred for 30 minutes (meanwhile the polymer is dissolved in boiling xylene).
Then the sample is cooled to 50 °C in 30 minutes and when reaching 50 °C the solution is placed in a water-bath at 25 °C and keeping it in the water-bath for exact 140 minutes without stirring.
Then the mixture is stirred for exact 10 minutes.
The mixture is filtered. The precipitate is dried in a vacuum-oven at 70 °C during 30 minutes.

$$XS\% = (100 \times m_1 \times v_0) / (m_0 \times v_1),$$

wherein

$m_0$ = initial polymer amount (g)
$m_1$ = weight of residue (g)
$v_0$ = initial volume (ml)
$V_1$ = volume of analyzed sample (ml)

### K. Hexane solubles (wt.-%)

FDA section 177.1520
During 2 hours 1 g of a polymer film of 100 $\mu$m thickness is added to 400 ml hexane and is boiled while stirring with a reflux cooler.
After 2 hours the mixture is immediately filtered on a filter paper N°41.
The precipitate is collected in an aluminium recipient and the residual hexane is evaporated on a steam bath under $N_2$ flow.
The amount of hexane solubles is determined by the formula

$$( (wt.\ sample + wt.\ crucible)-(wt\ crucible)\ )\ /\ (wt.\ sample) \cdot 100.$$

**L. Vicat A50**

Vicat A50 at 10 N is measured according to ISO 306 (10 N). Viact A50 is the temperature at which the specimen is penetrated to a depth of 1 mm by a flat-ended needle with a 1 sq. mm circular or square cross-section, under a 1000-gm load.

**M. Isothermal Crystallisation Speed**

ISO 11357-7 (2002)

**2. Examples**

**Example 1 (INVENTIVE 1)**

The reaction is done in a two loop reactor system and a gas phase reactor without any additional comonomer feed. During the production of the polymer, the 1-butene and ethylene content of the powder is gradually decreased. The 1-butene and ethylene content in the powder is decreased by lowering the 1-butene and ethylene concentration in the feed to the loop reactors. This is done gradually over a time period of 9 hours. 1-butene concentration in the feed is lowered from 6.5 wt.-% to 0.5 wt.-%. Ethylene concentration in the feed is kept constant at 1.0 wt%. The melt flow of the powder is kept constant by adjusting the hydrogen feed to the loops according to the 1-butene concentration in the feed to the loop reactors. The reaction temperature in the loop reactor system is 63 °C.

**Example 2 (INVENTIVE 2)**

The reaction is done in a two loop reactor system and a gas phase reactor without any additional comonomer feed. During the production of the polymer, the 1-butene and ethylene content of the powder is gradually decreased. The 1-butene and ethylene content in the powder is decreased by lowering the 1-butene and ethylene concentration in the feed to the loop reactors. This is done gradually over a time period of 7.5 hours. 1-butene concentration in the feed is lowered from 16.5 wt.-% to 1.0 wt.-%. Ethylene concentration in the feed is decreased from 1.0 wt% to 0.3 wt% in the first half of the lot and kept constant for the second part of the lot. The melt flow of the powder is kept constant by adjusting the hydrogen feed to the loops according to 1-butene concentration in the feed to the loop reactors. The loop reactor system temperature is 63 °C.

**Example 3 (COMPARISON 1)**

Same process as for production of polymer 1, but 1-butene and ethylene feed are constant (16.4 wt.-% 1-butene and 1.0 wt.-% ethylene in the feed to the reactors) to obtain a polymer with 9.0 wt.-% 1-butene and 1.0 wt.-% ethylene. Reactor temperature is 63 °C.

**Example 4 (COMPARISON 2)**

Same process settings as for production of polymer 1, but 1-butene and ethylene feed are constant (13.3 wt.-% 1-butene and 0.3 wt.-% ethylene in the feed to the reactors) to obtain a polymer with 8.0 wt.-% 1-butene and 0.3 wt.-% ethylene. Reactor temperature is 65 °C.

**Table 1: Properties of the Examples**

| | | Example 1 [Inventive] | Example 2 [Inventive] | Example 3 [Comparison] | Example 4 [Comparison] |
|---|---|---|---|---|---|
| C2-content | wt.-% | 1,0 | 0,6 | 1,0 | 0,3 |
| C4-content | wt.-% | 2,0 | 2,5 | 9,0 | 8,0 |
| Xylene Solubles | wt.-% | 3,9 | 4,1 | 5,1 | 4,1 |
| Hexane Solubles | wt.-% | 2,2 | 1,9 | 2.6 | - |

(continued)

| | | Example 1 [Inventive] | Example 2 [Inventive] | Example 3 [Comparison] | Example 4 [Comparison] |
|---|---|---|---|---|---|
| $MFR_2$ | g/10min | 7 | 7 | 6 | 8 |
| Vicat A50 (10 N) | °C | 135,7 | 131,1 | 115,8 | 125,6 |
| $T_{melt}$ | °C | 149,4 | 144,1 | 130,4 | 138,7 |
| $H_{melt}$ | J/g | 92,8 | 93,3 | 76,5 | 78,8 |
| $T_{cryst}$ | °C | 106 | 105 | 91 | 97,4 |
| $H_{cryst}$ | J/g | 84 | 85 | 68,6 | 68,4 |
| Fraction < 100 °C | % | 12,1 | 13,2 | 31,6 | 20,9 |
| Fraction < 120 °C | % | 19,6 | 23,1 | 47,9 | 32,2 |
| Flex Mod | MPa | 1081 | 1045 | 761 | 937 |

**Table 2: SIST-values**

| | | Example 1 | Example 2 | Example 3 | Example 4 |
|---|---|---|---|---|---|
| s<18 | % | 11,6 | 17,7 | 41,9 | 22,2 |
| 18<s<26 | % | 9,4 | 14,1 | 30,6 | 25,6 |
| 21<s<26 | % | 22,9 | 25,8 | 24,9 | 26,1 |
| 26<s<34 | % | 30,1 | 30,5 | 1,67 | 24,5 |
| 34<s<49 | % | 24,7 | 10,1 | 0,45 | 0,69 |

**Table 3: Isothermal Crystallisation Speed**

| | | Example 1 | Example 2 | Example 3 | Example 4 |
|---|---|---|---|---|---|
| at 100°C | min | 1,9 | 2 | 4 | 2,5 |
| at 105°C | min | 2 | 2,2 | 7,4 | 3,2 |
| at 110°C | min | 2,3 | 2,8 | NA | 5,8 |

## Claims

1. Terpolymer of propylene, ethylene and $C_4$ to $C_8$ α-olefin wherein

   a. the amount of propylene in said terpolymer is at least 94 wt.-%
   b. the amount of ethylene in said terpolymer is not more than 1.5 wt%,
   c. the melting temperature of said terpolymer is more than 140 °C, and
   d. the terpolymer has been produced in the presence of a Ziegler-Natta catalyst.

2. Terpolymer according to claim 1, wherein

   a. said terpolymer comprises at least 5 wt-% of a crystalline fraction with an isotactic sequence length "s" of more than 34 to less than 49, wherein said fraction is determined as defined in claim 8 and/or
   b. said terpolymer has a heat resistance measured according to ISO 306 Vicat A50 at 10 N of at least 127 °C.

3. Terpolymer according to any one of the preceding claims, wherein the melting temperature of said terpolymer is below 152 °C.

4. Terpolymer according to claim 3, wherein the melting temperature of said termpolymer is in the range of 145 to below 152°C.

5. Terpolymer according to any one of the preceding claims, wherein the amount of $C_4$ to $C_8$ α-olefin is at least 1.5 wt.-%.

6. Terpolymer according to any one of the preceding claims, wherein the amount of $C_4$ to $C_8$ α-olefin is below 4.0 wt.-%.

7.  Terpolymer according to any one of the preceding claims, wherein the $C_4$ to $C_8$ $\alpha$-olefin is 1-butene.

8.  Terpolymer according to any one of the preceding claims, wherein terpolymer comprises 5 to 20 wt.-% of a crystalline fraction with an isotactic sequence length "s" of below 18, wherein said fraction is determined stepwise isothermal segregation technique (SIST), wherein

> (i) the terpolymer is melted at 225 °C for 5 min.,
> (ii) then cooled with 60 °C/min to 145 °C
> (iii) held for 2 hours at 145 °C,
> (iv) then cooled with 60 °C/min to 135 °C
> (v) held for 2 hours at 135 °C,
> (vi) then cooled with 60 °C/min to 125 °C
> (vii) held for 2 hours at 125 °C,
> (viii) then cooled with 60 °C/min to 115 °C
> (ix) held for 2 hours at 115 °C,
> (x) then cooled with 60 °C/min to 105 °C
> (xi) held for 2 hours at 105 °C,
> (xii) then cooled down with 60 °C/min to 20 °C and
> (xiii) then heated at a heating rate of 10 °C/min up to 200 °C obtaining a melting curve of said cooled terpolymer, wherein

said melting curve is used

> (a) to calculate in a first step the lamella thickness distribution according to Thomson-Gibbs equation (Eq 1.)

$$T_m = T_0\left(1 - \frac{2\sigma}{\Delta H_0 \cdot L}\right) \quad (1)$$

wherein

> $T_0$ = 457 K,
> $\Delta H_0$ = 184 x $10^6$ J/m$^3$,
> a = 0,0496 J/m$^2$,
> $T_m$ is the measured temperature (K) and
> L is the lamella thickness (nm) and

> (b) to calculate in a second step the isotactic sequence length "s" using the equation (Eq 2.)

$$s = L / (0.65 \cdot 3) \quad (2)$$

wherein

> s is the isotactic sequence length and
> L is the lamella thickness.

9.  Terpolymer according to any one of the preceding claims, wherein terpolymer has xylene solubles of not more than 4.50 wt-%.

10. Terpolymer according to any one of the preceding claims, wherein terpolymer has hexane solubles of not more than 2.50 wt.-%.

11. Terpolymer according to any one of the preceding claims, wherein terpolymer has a felexural modulus according to ISO 178 of more than 950 MPa.

12. Use of a terpolymer according to any one of the preceding claims as a film.

13. Use according to claim 12, wherein the film is part of a biaxially oriented multilayer film, preferably a metallised biaxially oriented multilayer film.

14. Film comprising a terpolymer according to any one of the preceding claims 1 to 11.

15. Multilayer film wherein said film comprises

    (a) a core layer comprising a high crystallinity polypropylene homopolymer;
    (b) a first skin layer adjacent to said core layer wherein said skin layer comprises, more preferably is, the terpolymer according to any one of the preceding claims 1 to 11;
    (c) optionally a tie layer adjacent to said first skin layer comprising preferably maleic anhydride modified polypropylene homopolymer or copolymer;
    (d) optionally a metallized layer, preferably a aluminium layer, adjacent to said first skin or optionally first tie layer and on a side of the skin or optionally first tie layer opposite the core layer; and
    (e) optionally a second skin layer adjacent to said core layer and on a side of said core layer opposite said first skin layer.

16. Multilayer film according to claim 15, wherein said film is biaxially oriented.

17. Multilayer film according to claim 15 or 16, wherein second skin layer comprises a polyolefin selected from the group consisting of ethylene-propylene random copolymer, ethylene-propylene-butylene terpolymer, propylene-butylene copolymer, and ethylene-propylene impact copolymer

18. Film according to any one of the claims 15 to 17, wherein the biaxially oriented film is metallised.

19. Process for producing a multilayer film according any one of the claims 15 to 18, wherein the a multilayer melt of thermoplastic polymers comprising the terpolymer according to any one of the claims 1 to 11 is coextruded and subsequently cooled to form a multilayer sheet.

20. Process according to claim 19, wherein the multilayer sheet is biaxially oriented.

21. Process according to claim 19 or 20, wherein the multilayer sheet is metallised.

22. Article comprising a terpolymer according to any one of the preceding claims 1 to 11.

23. Article comprising a film according to any one of the preceding claims 15 to 18.

24. Article according to claim 23, wherein the article is a lamination packaging.

**Patentansprüche**

1. Terpolymer von Propylen, Ethylen und $C_4$ bis $C_8$ $\alpha$-Olefin worin

    (a) die Menge an Propylen in besagten Terpolymer mindestens 94 Gew.% ist,
    (b) die Menge an Ethylen in besagtem Terpolymer nicht mehr als 1,5 Gew.-% ist,
    (c) die Schmelztemperatur des besagten Terpolymer mehr als 140°C ist, und
    (d) das Terpolymer in Gegenwart eines Ziegler-Natta-Katalysators produziert worden ist.

2. Terpolymer nach Anspruch 1, **worin**

    (a) besagtes Terpolymer mindestens 5 Gew.-% einer kristalinen Fraktion mit einer isotaktischen Sequenzlänge "s" von mehr als 34 bis weniger als 49 umfasst, worin besagte Fraktion wie in Anspruch 8 definiert bestimmt ist, und/oder

(b) besagtes Terpolymer eine Wärmebeständigkeit gemessen nach ISO 306 Vicat A50 bei 10 N von mindestens 127°C hat.

3. Terpolymer nach irgendeinem der vorhergehenden Ansprüche, **worin** die Schmelztemperatur des besagten Terpolymer unter 152°C ist.

4. Terpolymer nach Anspruch 3, **worin** die Schmelztemperatur des besagten Terpolymers im Bereich von 145 bis unter 152°C ist.

5. Terpolymer nach irgendeinem der vorhergehenden Ansprüche, **worin** die Menge an $C_4$ bis $C_8$ $\alpha$-Olefin mindestens 1,5 Gew.-% ist.

6. Terpolymer nach irgendeinem der vorhergehenden Ansprüche, **worin** die Menge an $C_4$ bis $C_8$ $\alpha$-Olefin unter 4,0 Gew.-% ist.

7. Terpolymer nach irgendeinem der vorhergehenden Ansprüche, **worin** das $C_4$ bis $C_8$ $\alpha$-Olefin 1-Buten ist.

8. Terpolymer nach irgendeinem der vorhergehenden Ansprüche, **worin** das Terpolymer 5 bis 20 Gew.-% einer kristallinen Fraktion mit einer isotaktischen Sequenzlänge "s" von unter 18 umfasst, worin besagte Fraktion durch schrittweise isothermische Segregationstechnik (SIST) bestimmt ist, worin

(i) das Terpolymer bei 225°C für 5 min geschmolzen wird,
(ii) dann mit 60°C/min auf 145°C gekühlt wird,
(iii) für 2 Std. bei 145°C gehalten wird,
(iv) dann mit 60°C/min auf 145°C gekühlt wird,
(v) für 2 Std. bei 135°C gehalten wird,
(vi) dann mit 60°C/min auf 125°C,
(vii) für 2 Std. bei 125°C gehalten wird,
(viii) dann mit 60°C/min auf 115°C gekühlt wird,
(ix) für 2 Std. bei 115°C gehalten wird,
(x) dann mit 60°C/min auf 105°C gekühlt wird,
(xi) für 2 Std. bei 105°C gehalten wird,
(xii) dann mit 60°/min auf 20°C runtergekühlt wird, und
(xiii) dann mit einer Wärmerate von 10°C/min auf 200°C erwärmt wird, wobei eine Schmelzkurve des besagten gekühlten Terpolymers erhalten wird, worin besagte Schmelzkurve verwendet wird um

(a) in einem ersten Schritt die Lamellendicken-Verteilung nach der Thomson-Gibbs-Gleichung (Eq 1)

$$ T_m = T_0\left( 1 - \frac{2\sigma}{\Delta H_0 \cdot L} \right) \ (1) $$

worin

$T_0$ = 457 K,
$\Delta H_0$ = 184 x $10^6$ J/m$^3$,
$\sigma$ = 0,0496 J/m$^2$,
$T_m$ die gemessene Temperatur (K) ist, und
L die Lamellendicke Nanometer (nm) ist,
zu kalkulieren, und

(b) in einem zweiten Schritt die isotaktische Sequenzlänge "s" unter Verwendung der Gleichung (Eq 2)

$$S = L / (0,65 \cdot 3) \qquad (2)$$

worin

    s die isotaktische Sequenzlänge ist und
    L die Lamellendicke ist,
    zu kalkulieren.

9. Terpolymer nach irgendeinem der vorhergehenden Ansprüche **worin** das Terpolymer xylollösliche Anteile von nicht mehr als 4,50 Gew.-% aufweist.

10. Terpolymer nach irgendeinem der vorhergehenden Ansprüche, **worin** der Terpolymer hexanlösliche Anteile von nicht mehr als 2,50 Gew.-% aufweist.

11. Terpolymer nach irgendeinem der vorhergehenden Ansprüche **worin** das Terpolymer ein nach ISO 178 bestimmtes Biegemodul von nicht mehr als 950 MPa hat.

12. Verwendung eines Terpolymer nach irgendeinem der vorhergehenden Ansprüche als einem Film.

13. Verwendung nach Anspruch 12, **worin** der Film Teil eines biaxial orientierten Mehrschichtfilms, vorzugsweise eines metallisierten biaxial orientierten Mehrschichtfilms, ist.

14. Film umfassend ein Terpolymer nach irgendeinem der vorhergehenden Ansprüche 1 bis 11.

15. Mehrschichtfilm **worin** besagter Film umfasst

    (a) eine Kernschicht umfassend ein hochkristalines Polypropylen Homopolymer;
    (b) eine erste Außenschicht benachbart zu besagter Kernschicht worin besagte Außenschicht das Terpolymer nach irgendeinem der Ansprüche 1 bis 11, umfasst, vorzugsweise ist;
    (c) optional einen Haftvermittler benachbart zur besagten ersten Außenschicht umfassend vorzugsweise Maleinsäureanhydrid modifiziertes Polypropylen Homopolymer oder Copolymer;
    (d) optional eine metallisierte Schicht, vorzugsweise eine Aluminiumschicht, benachbart zu besagter erster Außenschicht oder optional zu erstem Haftvermittler und auf einer Seite der Außenschicht oder optional des ersten Haftvermittlers gegenüber der Kernschicht, und
    (d) optional eine zweite Außenschicht benachbart zur Kernschicht und auf einer Seite der besagten Kernschicht gegenüber der ersten Außenschicht.

16. Multischichtfilm nach Anspruch 15, **worin** besagter Film biaxial orientiert ist.

17. Multischichtfilm nach Anspruch 15 oder 16, **worin** die zweite Außenschicht ein Polyolefin umfasst, ausgewählt aus der Gruppe bestehend aus Ethylen-Propylen randomisiertes Copolymer, Ethylen-Propylen-Butylen Terpolymer, Propylen-Butylen-Copolymer und Ethylen-Propylen schlagfestes Copolymer.

18. Film nach irgendeinem der Ansprüche 15 bis 17, **worin** der biaxial orientierte Film metallisiert ist.

19. Verfahren zur Herstellung eines Multischichtfilms nach irgendeinem der Ansprüche 15 bis 18, **worin** eine Multischichtschmelze von thermoplastischem Polymeren umfassend das Terpolymer nach irgendeinem der Ansprüche 1 bis 11 coextrudiert wird und anschließend gekühlt wird um einen Multischichtfilm zu bilden.

20. Verfahren nach Anspruch 19, worin der Multischichtfilm biaxial orientiert wird.

21. Verfahren nach Anspruch 19 oder 20, **worin** die Multischicht metallisiert wird.

22. Gegenstand umfassend ein Terpolymer nach irgendeinem der vorhergehenden Ansprüche 1 bis 11.

**23.** Gegenstand umfassend einen Film nach irgendeinem der Ansprüche 15 bis 18.

**24.** Gegenstand nach Anspruch 23, **worin** der Gegenstand eine Laminatverpackung ist.

**Revendications**

**1.** Terpolymère de propylène, d'éthylène et d'α-oléfine en C$_4$ à C$_8$, dans lequel :

(a) la quantité de propylène dans ledit terpolymère est d'au moins 94 % en poids,
(b) la quantité d'éthylène dans ledit terpolymère n'excède pas 1,5 % en poids,
(c) la température de fusion dudit terpolymère est supérieure à 140 °C, et
(d) le terpolymère est produit en présence d'un catalyseur de Ziegler-Natta.

**2.** Terpolymère selon la revendication 1, dans lequel :

(a) ledit terpolymère comprend au moins 5 % en poids d'une fraction cristalline ayant une longueur de séquence isotactique « s » comprise entre plus de 34 et moins de 49, ladite fraction étant déterminée de la manière définie dans la revendication 8, et/ou
(b) ledit terpolymère a une résistance thermique mesurée selon la norme ISO 306, Vicat A50, à 10 N, au moins égale à 127 °C.

**3.** Terpolymère selon l'une quelconque des revendications précédentes, dans lequel la température de fusion dudit terpolymère est inférieure à 152 °C.

**4.** Terpolymère selon la revendication 3, dans lequel la température de fusion dudit terpolymère est comprise dans la gamme allant de 145 à moins de 152 °C.

**5.** Terpolymère selon l'une quelconque des revendications précédentes, dans lequel la quantité d'α-oléfine en C$_4$ à C$_8$ est au moins égale à 1,5 % en poids.

**6.** Terpolymère selon l'une quelconque des revendications précédentes, dans lequel la quantité d'α-oléfine en C$_4$ à C$_8$ est inférieure à 4,0 % en poids.

**7.** Terpolymère selon l'une quelconque des revendications précédentes, dans lequel l'α-oléfine en C$_4$ à C$_8$ est le 1-butène.

**8.** Terpolymère selon l'une quelconque des revendications précédentes, dans lequel le terpolymère comprend entre 5 et 20 % en poids d'une fraction cristalline ayant une longueur de séquence isotactique « s » inférieure à 18, ladite fraction étant déterminée par la technique de la ségrégation isothermique par paliers (SIST), où :

(i) le terpolymère est fondu à 225 °C pendant 5 min,
(ii) puis refroidi à 145 °C à raison de 60 °C/min,
(iii) maintenu pendant 2 heures à 145 °C,
(iv) puis refroidi à 135 °C à raison de 60 °C/min,
(v) maintenu pendant 2 heures à 135 °C,
(vi) puis refroidi à 125 °C à raison de 60 °C/min,
(vii) maintenu pendant 2 heures à 125 °C,
(viii) puis refroidi à 115 °C à raison de 60 °C/min,
(ix) maintenu pendant 2 heures à 115 °C,
(x) puis refroidi à 105 °C à raison de 60 °C/min,
(xi) maintenu pendant 2 heures à 105 °C,
(xii) puis refroidi à 20 °C à raison de 60 °C/min,
(xiii) puis chauffé jusqu'à 200 °C selon une vitesse de chauffage de 10°C/min,

de façon à obtenir une courbe de fusion dudit terpolymère refroidi, ladite courbe de fusion étant utilisée :

(a) pour calculer, lors d'une première étape, la répartition de l'épaisseur lamellaire selon l'équation de Thomson-Gibbs (1) :

$$T_m = T_0 \left( 1 - \frac{2\sigma}{\Delta H_0 \cdot L} \right) \quad (1)$$

dans laquelle :

$T_0 = 457$ K,
$\Delta H_0 = 184 \times 10^6$ J/m$^3$,
$\sigma = 0{,}0496$ J/m$^2$,
$T_m$ est la température mesurée (K), et
L est l'épaisseur lamellaire (nm) ; et

(b) pour calculer, lors d'une seconde étape, la longueur de séquence isotactique « s » en utilisant l'équation (2) :

$$s = L / (0{,}65 \times 3) \quad (2)$$

dans laquelle :

s est la longueur de séquence isotactique, et
L est l'épaisseur lamellaire.

**9.** Terpolymère selon l'une quelconque des revendications précédentes, lequel a des solubles de xylène n'excédant pas 4,50 % en poids.

**10.** Terpolymère selon l'une quelconque des revendications précédentes, lequel a des solubles d'hexane n'excédant pas 2,50 % en poids.

**11.** Terpolymère selon l'une quelconque des revendications précédentes, lequel a un module de flexion selon la norme ISO 178 de plus de 950 MPa.

**12.** Utilisation d'un terpolymère selon l'une quelconque des revendications précédentes en tant que film.

**13.** Utilisation selon la revendication 12, dans laquelle le film fait partie d'un film multicouches à orientation biaxiale, de préférence d'un film multicouches à orientation biaxiale métallisé.

**14.** Film comprenant un terpolymère selon l'une quelconque des revendications 1 à 11.

**15.** Film multicouches, lequel comprend :

(a) une couche centrale comprenant un homopolymère de polypropylène de cristallinité élevée ;
(b) une première couche superficielle adjacente à ladite couche centrale, laquelle comprend, et de façon plus préférable est, le terpolymère selon l'une quelconque des revendications 1 à 11 ;
(c) éventuellement, une couche de liaison adjacente à ladite première couche superficielle, comprenant de préférence un homopolymère ou un copolymère de polypropylène modifié par un anhydride maléique ;
(d) éventuellement, une couche métallisée, de préférence une couche d'aluminium, adjacente à ladite première couche superficielle ou à ladite éventuelle première couche de liaison, et placée sur un côté de la première couche superficielle ou de l'éventuelle première couche de liaison opposé à la couche centrale ; et
(e) éventuellement, une seconde couche superficielle adjacente à ladite couche centrale, et placée sur un côté de ladite couche centrale opposé à ladite première couche superficielle.

**16.** Film multicouches selon la revendication 15, lequel est à orientation biaxiale.

**17.** Film multicouches selon la revendication 15 ou 16, dans lequel la seconde couche superficielle comprend une polyoléfine choisie dans le groupe constitué par un copolymère aléatoire d'éthylène-propylène, un terpolymère d'éthylène-propylène-butylène, un copolymère de propylène-butylène, et un copolymère choc d'éthylène-propylène.

**18.** Film selon l'une quelconque des revendications 15 à 17, dans lequel le film à orientation biaxiale est métallisé.

**19.** Procédé de production d'un film multicouches selon l'une quelconque des revendications 15 à 18, dans lequel une masse fondue multicouches de polymères thermoplastiques comprenant le terpolymère selon l'une quelconque des revendications 1 à 11 est co-extrudée puis refroidie pour former une feuille multicouches.

**20.** Procédé selon la revendication 19, dans lequel la feuille multicouches est à orientation biaxiale.

**21.** Procédé selon la revendication 19 ou 20, dans lequel la feuille multicouches est métallisée.

**22.** Article comprenant un terpolymère selon l'une quelconque des revendications 1 à 11.

**23.** Article comprenant un film selon l'une quelconque des revendications 15 à 18.

**24.** Article selon la revendication 23, lequel est un emballage par laminage.

**Figure 1:     SIST Analysis**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9858971 A
- US 5948547 A
- US 5326625 A
- EP 0674991 A1

### Non-patent literature cited in the description

- **T. Hayashi ; Y. Inoue ; R. Chüjö ; T. Asakura.** *Polymer,* 1988, vol. 29, 138-43
- **Chujo R et al.** *Polymer,* 1994, vol. 35, 339